(19) Europäisches Patentamt / European Patent Office / Office européen des brevets

(11) **EP 4 744 954 A1**

(12) **EUROPEAN PATENT APPLICATION**
published in accordance with Art. 153(4) EPC

(43) Date of publication:
20.05.2026 Bulletin 2026/21

(51) International Patent Classification (IPC):
B60L 58/27 (2019.01)    B60L 58/25 (2019.01)
B60L 15/08 (2006.01)    B60L 15/20 (2006.01)
H01M 10/615 (2014.01)

(21) Application number: 24847578.2

(22) Date of filing: 13.03.2024

(86) International application number:
PCT/CN2024/081471

(87) International publication number:
WO 2025/025612 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.07.2023  CN 202310956800
08.11.2023  CN 202311485386

(71) Applicant: Huawei Digital Power Technologies
Co., Ltd.
Shenzhen, Guangdong 518043 (CN)

(72) Inventors:
• XU, Yankun
  Shenzhen, Guangdong 518043 (CN)
• CAO, Sen
  Shenzhen, Guangdong 518043 (CN)
• ZHANG, Xueliang
  Shenzhen, Guangdong 518043 (CN)

(74) Representative: Maiwald GmbH
Engineering
Elisenhof
Elisenstrasse 3
80335 München (DE)

(54) **METHOD FOR PULSE HEATING OF POWER BATTERY OF ELECTRIC VEHICLE, AND ELECTRIC VEHICLE**

(57)    This application provides a method for pulse-heating a power battery of an electric vehicle, and an electric vehicle. The electric vehicle includes a plurality of motors and a plurality of three-phase bridge arms. Bridge arm midpoints of each three-phase bridge arm are configured to connect to a three-phase winding of one motor. Each three-phase bridge arm is configured to connect to the power battery through a direct current bus. The control method includes: controlling each three-phase bridge arm to be configured to generate a pulse current on the direct current bus; and adjusting a switching frequency of a switching transistor of at least one of the plurality of three-phase bridge arms to reduce a phase difference between pulse currents generated by a plurality of inverter circuits. A phase value of a pulse current output by the at least one three-phase bridge arm is adjusted, so that a phase difference between pulse currents generated by the plurality of three-phase bridge arms is reduced, to improve heating efficiency of the power battery.

FIG. 3

**Description**

**CROSS-REFERENCE TO RELATED APPLICATION**

This application claims priorities to Chinese Patent Application No. 202310956800.X, filed with the China National Intellectual Property Administration on July 31, 2023 and entitled "DUAL MOTOR CONTROLLER AND METHOD FOR CONTROLLING MOTOR CONTROLLER", and to Chinese Patent Application No. 202311485386.5, filed with the China National Intellectual Property Administration on November 8, 2023 and entitled "METHOD FOR PULSE-HEATING POWER BATTERY OF ELECTRIC VEHICLE, AND ELECTRIC VEHICLE", both of which are incorporated herein by reference in their entireties.

**TECHNICAL FIELD**

This application relates to the field of electric vehicles, and in particular, to a method for pulse-heating a power battery of an electric vehicle, and an electric vehicle.

**BACKGROUND**

In a low-temperature environment, charging and discharging capabilities of a power battery of an electric vehicle decrease sharply. Therefore, the power battery needs to be heated, to enable the electric vehicle to travel normally. Currently, there are various common heating manners: positive temperature coefficient (positive temperature coefficient ceramic heating mode, PTC) heating, active heating by a motor, and the like. In all of the foregoing heating manners, the battery is heated by heating a water loop. However, a heating rate is not high, affecting user experience.

In addition, the power battery can also be heated in a high-frequency pulse-heating manner. In this manner, a powertrain is mainly used to implement charging and discharging of the power battery with a high-frequency alternating current, to heat the battery by using heat generated by internal resistance of the battery. When a single powertrain is used for heating, due to limitation of hardware such as a winding of a motor and a bus capacitor, an adjustable range of a pulse current generated by the powertrain is limited. Consequently, the heating rate of the power battery is limited. When a plurality of powertrains are used for heating, due to a large phase difference between pulse currents flowing into the battery, the pulse currents cancel each other out, affecting the heating rate.

**SUMMARY**

This application provides a method for pulse-heating a power battery of an electric vehicle, and an electric vehicle. A phase difference between pulse currents generated by a plurality of three-phase bridge arms is reduced, to improve heating efficiency of the power battery.

According to a first aspect, this application provides a method for pulse-heating a power battery of an electric vehicle. The electric vehicle includes a plurality of motors and a plurality of three-phase bridge arms. Bridge arm midpoints of each three-phase bridge arm are configured to connect to a three-phase winding of one motor. Each three-phase bridge arm is configured to connect to the power battery through a direct current bus. The control method includes: controlling each three-phase bridge arm to be configured to generate a pulse current on the direct current bus, where the pulse current is used to heat the power battery; adjusting a switching frequency of a switching transistor of at least one of the plurality of three-phase bridge arms to reduce a phase difference between pulse currents generated by the plurality of three-phase bridge arms.

When there is a large phase difference between pulse currents flowing into the power battery, directions may affect each other, and intensities may affect each other. Even if two pulse currents have opposite directions or amplitudes, the two pulse currents may cancel each other out, greatly affecting heating efficiency of the power battery. Therefore, a phase of a pulse current output by the at least one of the plurality of three-phase bridge arms is adjusted, so that the phase difference between the pulse currents generated by the plurality of three-phase bridge arms is reduced, to improve heating efficiency of the power battery.

An excessively small phase difference between the pulse currents output by the three-phase bridge arms is difficult to measure, and impact of the phase difference on heating efficiency is limited. Therefore, in a possible implementation, the method includes: when a phase difference between pulse currents generated by any two of the plurality of three-phase bridge arms is greater than a preset value, adjusting a switching frequency of a switching transistor of at least one of the any two three-phase bridge arms to reduce the phase difference between the pulse currents output by the two three-phase bridge arms.

When there is a small phase difference between the pulse currents generated by the three-phase bridge arms, directions and intensities of the pulse currents flowing into the power battery are not greatly affected. However, when the phase difference between the pulse currents generated by the any two three-phase bridge arms is greater than the preset value, there is a specific cancellation. Therefore, in this case, the switching frequency of the switching transistor of the at least one of the any two three-phase bridge arms is adjusted to reduce the phase difference between the pulse currents output by the plurality of three-phase bridge arms, improving heating efficiency of the power battery.

In a possible implementation, the method includes: controlling the at least one of the plurality of three-phase bridge arms to first generate a pulse current, and controlling another three-phase bridge arm other than the at least one three-phase bridge arm to subsequently generate a pulse current; or controlling another three-phase bridge arm other than the at least one three-phase bridge arm to first generate a pulse current, and controlling the at least one of the plurality of three-phase bridge arms to subsequently generate a pulse current. In this manner, the phase difference between the pulse currents generated by the plurality of three-phase bridge arms can be reduced, to improve heating efficiency of a power battery.

In a possible implementation, the method includes: controlling a switching frequency of a switching transistor of the another three-phase bridge arm to reduce a phase difference between the pulse current generated by the another three-phase bridge arm and the pulse current generated by the at least one three-phase bridge arm.

In a possible implementation, the method includes: when a phase difference between the pulse current generated by the another three-phase bridge arm and the pulse current generated by the at least one three-phase bridge arm is greater than the preset value, controlling a switching frequency of a switching transistor of the another three-phase bridge arm to reduce the phase difference between the pulse current generated by the another three-phase bridge arm and the pulse current generated by the at least one three-phase bridge arm. The switching frequency of the switching transistor of the another three-phase bridge arm is controlled, so that the phase difference between the pulse currents generated by the plurality of three-phase bridge arms can be reduced, to improve heating efficiency of the power battery.

In a possible implementation, the at least one three-phase bridge arm is a three-phase bridge arm corresponding to a drive motor, the drive motor is configured to connect to a wheel of the electric vehicle through transmission, and the another three-phase bridge arm is a three-phase bridge arm corresponding to a motor other than the drive motor in the plurality of motors.

In a possible implementation, the bridge arm midpoints of three phase bridge arms of each three-phase bridge arm are configured to output a three-phase current. The three-phase current includes a U-phase current, a V-phase current, and a W-phase current. The method includes: in response to that a phase difference between U-phase currents output by any two of the plurality of three-phase bridge arms, a phase difference between V-phase currents output by any two of the plurality of three-phase bridge arms, or a phase difference between W-phase currents output by any two of the plurality of three-phase bridge arms is greater than a preset value, adjusting a switching frequency of a switching transistor of at least one of the any two three-phase bridge arms to reduce the phase difference between the U-phase currents, the phase difference between the V-phase currents, and the phase difference between the W-phase currents output by the any two three-phase bridge arms. Frequencies of the three-phase current and the pulse current are the same. Therefore, whether a phase difference between pulse currents generated by any two three-phase bridge arms is greater than a preset value can also be determined by detecting a phase difference between currents in a same phase that correspond to the two three-phase bridge arms. When a phase difference between specific phase currents output by the any two three-phase bridge arms is greater than the preset value, the switching frequency of the switching transistor of the at least one of the any two three-phase bridge arms may be adjusted to reduce the phase difference between the specific phase currents output by the any two three-phase bridge arms, improving heating efficiency of the power battery.

In a possible implementation, a frequency of the three-phase current is the same as a frequency of the pulse current.

In a possible implementation, the method includes: when a phase difference between pulse currents generated by the any two of the plurality of three-phase bridge arms is greater than the preset value, or the phase difference between the U-phase currents output by the any two three-phase bridge arms, the phase difference between the V-phase currents output by the any two three-phase bridge arms, or the phase difference between the W-phase currents output by the any two three-phase bridge arms is greater than the preset value, adjusting a frequency of a direct-axis current component of a three-phase current output by the at least one of the any two three-phase bridge arms. A frequency of a voltage indicated by a voltage reference signal corresponding to one of the three-phase bridge arms is increased/decreased, so that a frequency of a direct-axis current component of a pulse current generated by one of the three-phase bridge arms can be increased/decreased. In this way, the phase difference between the pulse currents generated by the two three-phase bridge arms is reduced, to improve heating efficiency of the power battery.

In a possible implementation, the method includes: when a phase difference between pulse currents generated by the any two of the plurality of three-phase bridge arms is greater than the preset value, or the phase difference between the U-phase currents output by the any two three-phase bridge arms, the phase difference between the V-phase currents output by the any two three-phase bridge arms, or the phase difference between the W-phase currents output by the any two three-phase bridge arms is greater than the preset value, adjusting a frequency of a direct-axis current component of a three-phase current output by the at least one of the any two three-phase bridge arms until the phase difference between the pulse currents generated by the any two of the plurality of three-phase bridge arms is less than or equal to the preset value, and the phase difference between the U-phase currents, the phase difference between the V-phase currents, and the phase difference between the W-phase currents output by the any two three-phase bridge arms are less than or equal to the preset value.

A frequency of a voltage indicated by a voltage reference signal corresponding to one of the three-phase bridge arms is increased/decreased, so that a frequency of a direct-axis current component of a pulse current generated by one of the three-phase bridge arms can be increased/decreased. In this way, the phase difference between the pulse currents generated by the any two of the plurality of three-phase bridge arms is less than or equal to the preset value, and the phase difference between the U-phase currents, the phase difference between the V-phase currents, and the phase difference between the W-phase currents output by the any two three-phase bridge arms are less than or equal to the preset value, to improve heating efficiency of the power battery.

In a possible implementation, the method includes: when the phase difference between the pulse currents generated by the any two of the plurality of three-phase bridge arms is less than or equal to the preset value, and the phase difference between the U-phase currents output by the any two three-phase bridge arms, the phase difference between the V-phase currents output by the any two three-phase bridge arms, or the phase difference between the W-phase currents output by the any two three-phase bridge arms is less than or equal to the preset value, controlling a frequency of a direct-axis current component of the three-phase current output by each three-phase bridge arm to be a preset frequency. After a frequency of a voltage indicated by a voltage reference signal corresponding to one three-phase bridge arm is increased/decreased, if the phase difference between the pulse currents generated by the two three-phase bridge arms is less than or equal to the preset value again, the frequency of the direct-axis current component of the three-phase current output by each three-phase bridge arm may be controlled to be the preset frequency, to avoid generating a phase difference again between the plurality of three-phase bridge arms.

To avoid a transmission delay problem caused by different transmission path lengths, in a possible implementation, the method includes: first outputting a first control signal to control a three-phase bridge arm corresponding to a drive motor to output the three-phase current, and subsequently outputting a second control signal to control a three-phase bridge arm corresponding to another motor to output the three-phase current. Frequencies of direct-axis current components of the three-phase currents indicated by the first control signal and the second control signal are the same. In this method, a problem caused by a transmission delay can be reduced. A sequence of the control signals is adjusted, so that the phase difference output by three-phase bridge arms is reduced, to improve heating efficiency of the power battery.

In a possible implementation, the method includes: controlling a quadrature-axis current component of a three-phase current output by each three-phase bridge arm to be less than a preset value; or controlling a value of torque output by each motor to be less than a preset torque value. In this application, a quadrature-axis current component of the pulse current generated by the three-phase bridge arm is less than the preset value, or the value of torque output by the motor is less than the preset torque value, to avoid affecting ride experience of the electric vehicle due to vibration and noise generated through unexpected torque being transmitted to a wheel.

In a possible implementation, the method includes: controlling frequencies of the pulse currents output by the plurality of three-phase bridge arms to be the same.

In a possible implementation, the adjusting a frequency of a direct-axis current component of a three-phase current output by the three-phase bridge arm includes: increasing the frequency of the direct-axis current component of the three-phase current output by the three-phase bridge arm; or reducing the frequency of the direct-axis current component of the three-phase current output by the three-phase bridge arm.

According to a second aspect, this application provides an electric vehicle. The electric vehicle includes a control apparatus, a plurality of motors, and a plurality of three-phase bridge arms in a one-to-one correspondence with the plurality of motors. Each three-phase bridge arm includes three phase bridge arms. Bridge arm midpoints of each three-phase bridge arm are configured to connect to a three-phase winding of one motor. Each three-phase bridge arm is configured to connect to a power battery through a direct current bus. The control apparatus is configured to control at least two three-phase bridge arms to generate pulse currents on the direct current bus. Frequencies of the pulse currents generated by the at least two three-phase bridge arms on the direct current bus are the same and a phase difference is less than a preset value.

**BRIEF DESCRIPTION OF DRAWINGS**

FIG. 1 is a diagram 1 of a connection of an electric vehicle according to an embodiment of this application;
FIG. 2 is a diagram 2 of a structure of an electric vehicle according to an embodiment of this application;
FIG. 3 is a diagram 1 of a connection between a three-phase bridge arm and a motor according to an embodiment of this application;

FIG. 4 is a diagram 2 of a connection between a three-phase bridge arm and a motor according to an embodiment of this application;

FIG. 5(a) to FIG. 5(d) are a diagram 1 of pulse currents inputting to a power battery;

FIG. 6(a) and FIG. 6(b) are a diagram 2 of pulse currents inputting to a power battery;

FIG. 7 is a diagram of phase currents;

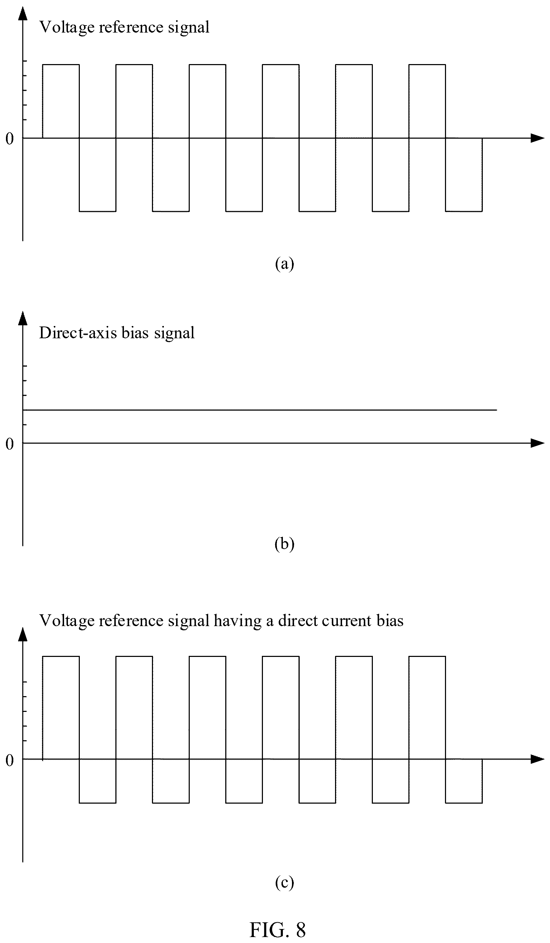

(a) to (c) in FIG. 8 are a diagram of a waveform of a voltage indicated by a voltage reference signal;

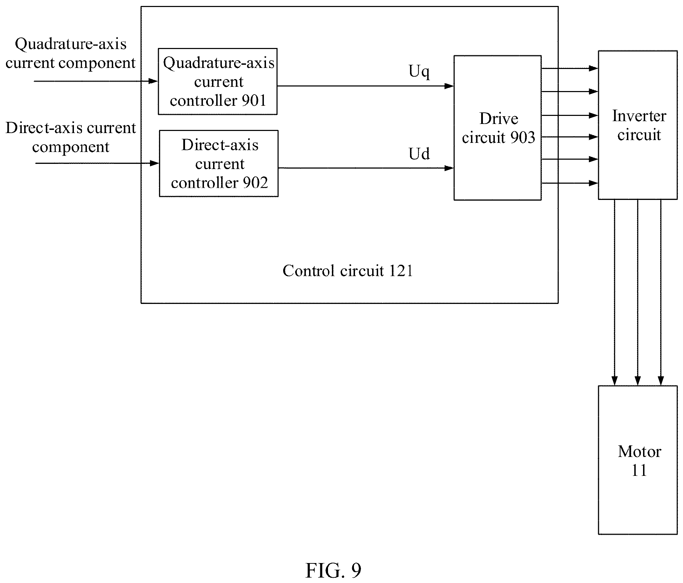

FIG. 9 is a diagram of a structure of a control circuit;

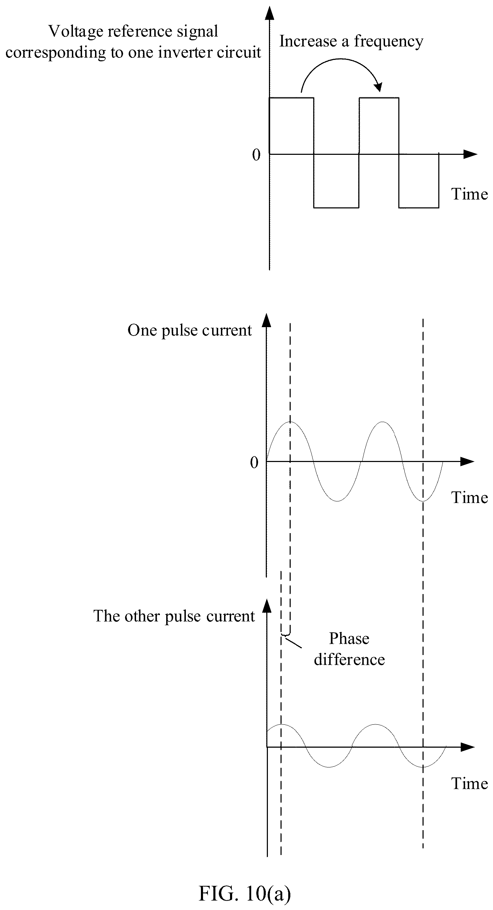

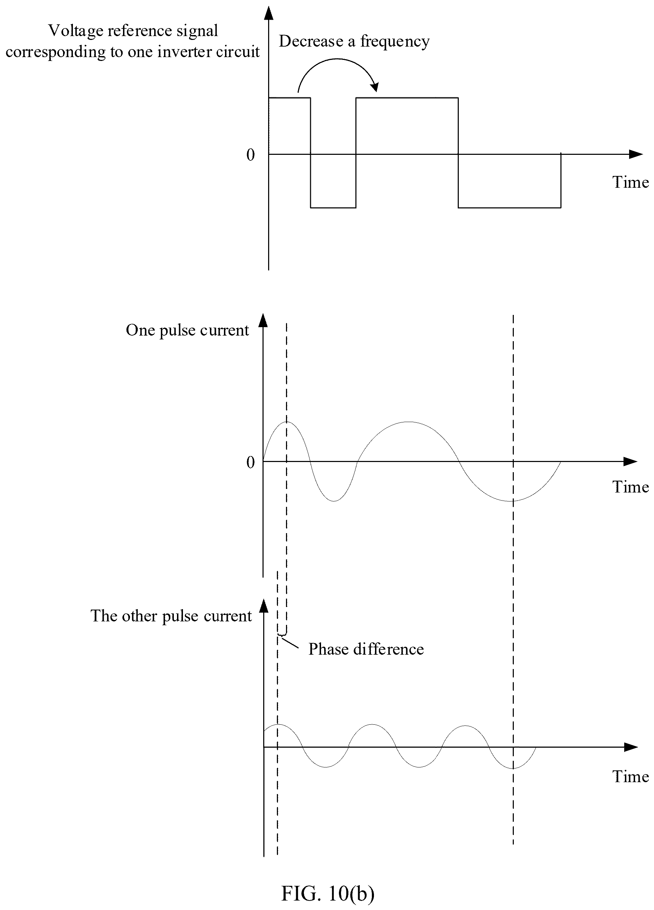

FIG. 10(a) and FIG. 10(b) are a diagram 1 of a voltage reference signal and a pulse current;

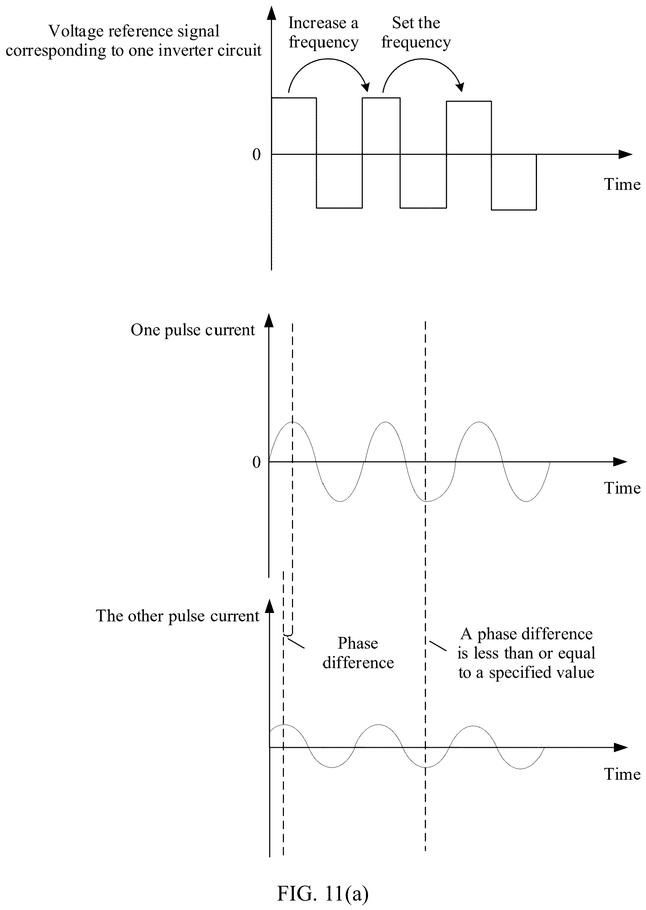

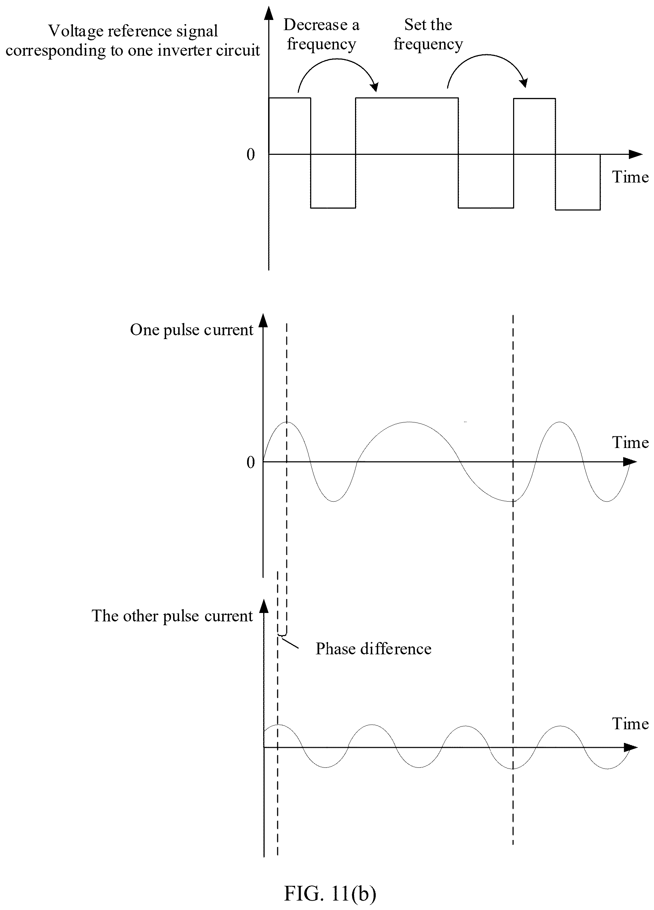

FIG. 11(a) and FIG. 11(b) are a diagram 2 of a voltage reference signal and a pulse current;

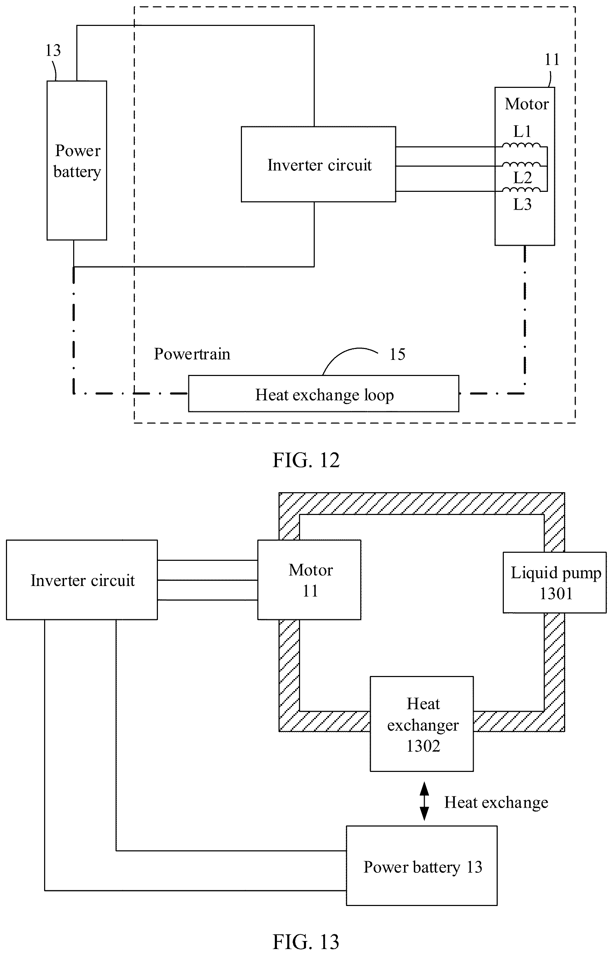

FIG. 12 is a diagram 3 of an electric vehicle according to an embodiment of this application; and

FIG. 13 is a diagram 4 of an electric vehicle according to an embodiment of this application.

## DESCRIPTION OF EMBODIMENTS

The following describes the technical solutions in specific implementations of this application with reference to accompanying drawings in implementations. Before specific content of the technical solutions is described, terms used in this application are first briefly described.

In this specification and claims, the words "first", "second", "third", and the like or similar words such as a module A, a module B, and a module C are merely used to distinguish between similar objects, and do not represent a specific order of the objects. It may be understood that specific orders or sequences may be exchanged if permitted, so that embodiments of this application described herein can be implemented in an order other than an order illustrated or described herein.

The term "include" used in this specification and claims should not be construed as being limited to the content listed below, and does not exclude other elements or steps. It should be construed as specifying existence of a mentioned feature, whole, step, or part, but does not exclude existence or addition of one or more other features, wholes, steps, or parts and their groups. Therefore, the expression "a device including an apparatus A and an apparatus B" should not be limited to a device including only the components A and B.

"One embodiment" or "an embodiment" mentioned in this specification means that a particular feature, structure, or characteristic described in combination with this embodiment is included in at least one embodiment of this application. Therefore, the expression "in one embodiment" or "in an embodiment" appearing throughout this specification does not necessarily indicate a same embodiment, but may indicate a same embodiment. Further, in one or more embodiments, the particular feature, structure, or characteristic can be combined in any proper manner, as will be clear from the present disclosure to a person of ordinary skill in the art.

Unless otherwise defined, all technical and scientific terms used in this specification have same meanings as those usually understood by a person skilled in the art of this application. In case of any inconsistency, the meaning described in this specification or the meaning obtained according to the content recorded in this specification shall be used. In addition, the terms used in this specification are merely for the purpose of describing embodiments of this application, but are not intended to limit this application.

A motor of an electric vehicle is usually an alternating current motor, and a power battery is a direct current source. Therefore, a direct current output by the power battery is converted into a three-phase alternating current of the motor through an inverter circuit. Coordinate axes of the three-phase alternating current are separately a U-axis, a V-axis, and a W-axis. Three phases of the alternating current may also be separately referred to as a U phase, a V phase, and a W phase. To simplify analysis of the motor, a stationary three-phase coordinate is usually transformed into a rotating d-q coordinate. Such transformation is Park transformation (Park transformation). In a d-q coordinate system, three coordinate axes are separately referred to as a direct axis, a quadrature axis, and a zero axis.

The direct axis (direct axis) is also referred to as a D axis or a d-axis, and is a time-varying direct current coordinate axis obtained through Park transformation of a stationary U/V/W three-phase coordinate axis.

The quadrature axis (quadrature axis) is also referred to as a Q axis or a q-axis, and is a time-varying quadrature current coordinate axis obtained through Park transformation of the stationary U/V/W three-phase coordinate axis.

The zero axis is also referred to as a 0 axis or a 0-axis, and is a coordinate axis perpendicular to a d-q plane on which the direct axis and the quadrature axis are located.

Specifically, a formula for the Park transformation may be as follows:

$$\begin{bmatrix} I\_d \\ I\_q \\ I\_0 \end{bmatrix} = \frac{2}{3} \begin{bmatrix} \cos(\theta) & \cos(\theta-2\pi/3) & \cos(\theta+2\pi/3) \\ -\sin(\theta) & -\sin(\theta-2\pi/3) & -\sin(\theta+2\pi/3) \\ 1/2 & 1/2 & 1/2 \end{bmatrix} \begin{bmatrix} I\_u \\ I\_v \\ I\_w \end{bmatrix}$$

θ is an included angle between the d-axis and the U-axis. I_d is referred to as a direct-axis current, and is mainly used to adjust a magnetic field. I_q is referred to as a quadrature-axis current, and is mainly used to adjust torque. I_0 is referred to as a zero-sequence current. I_u, I_v, and I_w are respectively currents on the U-axis, the V-axis, and the W-axis, namely, a three-phase current.

The foregoing matrix is an expression for transforming the three-phase current into I_d, I_q, and I_0. An expression for transforming I_d, I_q, and I_0 into the three-phase current may be obtained through inverse matrix transformation. Details are not described herein.

The electric vehicle includes a motor, a motor controller, and a power battery. The motor controller receives electric energy of the power battery and supplies power to the motor. The motor is configured to drive a wheel of the electric vehicle to rotate, so that the electric vehicle travels.

A temperature has a great impact on the power battery. A lithium plating phenomenon may occur when the power battery is charged and discharged at a low temperature. This may cause a power battery capacity to decrease and even cause a power battery safety risk. Therefore, the electric vehicle is allowed to travel only after the power battery is first heated to a specific temperature.

Currently, three manners for heating the power battery are mainly used.

A manner of heating the power battery is heating the power battery by using an external heating system. For example, a power battery thermal loop is disposed outside the power battery, and the power battery thermal loop has a heat-carrying fluid that carries heat. A positive temperature coefficient (PTC) resistor heats the hot-carrying fluid in the power battery thermal loop. The hot-carrying fluid in the power battery thermal loop conducts heat to the power battery to heat the power battery. In the foregoing manner, the hot-carrying fluid in the power battery thermal loop needs to be first heated, and then the power battery is heated by using the hot-carrying fluid in the power battery thermal loop. Therefore, a heat transfer path is long, and heating efficiency is low.

A manner of heating the power battery is performing electric drive active heating. In the electric drive active heating manner, an excitation current of the motor is used to generate heat on the motor to heat the power battery. The motor controller outputs the three-phase alternating current to the motor. The three-phase alternating current causes the torque of the motor to be zero. The excitation current generates heat on a winding of the motor. The heat generated on the motor is conducted to the power battery by using a heat conduction apparatus between the motor and the power battery for heating. In the foregoing manner, the heat of the motor needs to be conducted to the power battery by using the heat conduction apparatus. Therefore, the foregoing heating manner has disadvantages of a long heat transfer path, a low heating rate of the power battery, and low heating efficiency.

A manner of heating the power battery is performing high-frequency pulse-heating. In the high-frequency pulse-heating manner, a high-frequency pulse current generated by the motor controller is used to heat the power battery. A motor controller bridge arm circuit generates the high-frequency pulse current. The high-frequency pulse current generates heat on internal resistance of the power battery when passing through the power battery, to heat the power battery. The high-frequency heating manner has an advantage of a high heating rate and is widely focused.

In the high-frequency pulse-heating method, when a motor controller in a single powertrain is used for heating, due to limitation of hardware such as a winding of a motor and a bus capacitor, an adjustable range of a high-frequency pulse current generated by the powertrain is limited. Consequently, a heating rate of the power battery is limited. When a plurality of motor controllers are used to output a plurality of high-frequency pulse currents to heat the power battery at the same time, a heating rate may be improved, but due to a large phase difference between pulse currents flowing into the battery, the pulse currents cancel each other out, affecting heating rate. When a plurality of pulse currents appear alternately, directions of the plurality of pulse currents may affect each other, and intensities of the plurality of pulse currents may affect each other. If two pulse currents have opposite directions or amplitudes, the two pulse currents cancel each other out to some extent, and consequently effect of a superimposed current is weakened. In view of this, this application provides a method for pulse-heating a power battery of an electric vehicle, and an electric vehicle. A phase difference between pulse currents generated by a plurality of three-phase bridge arms is reduced, to improve heating efficiency of the power battery.

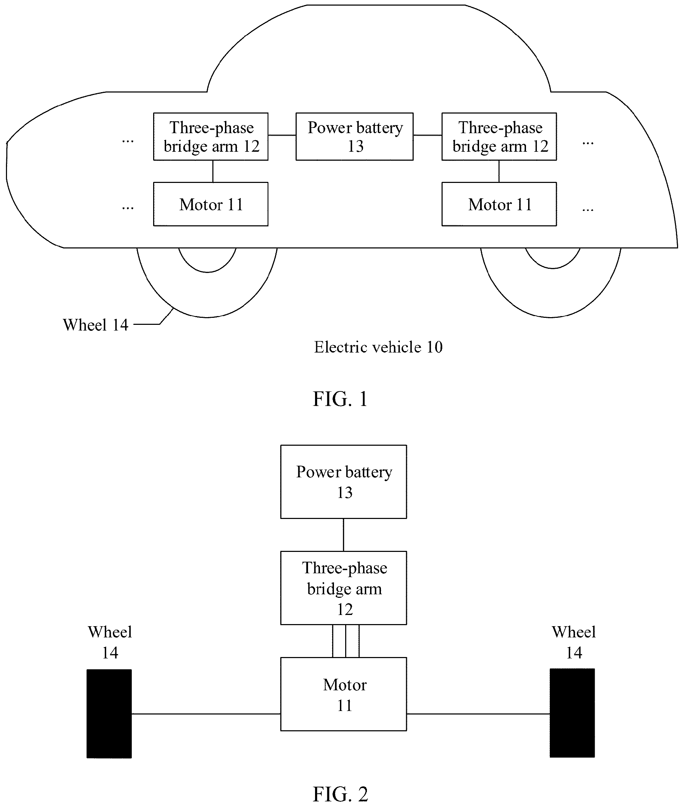

FIG. 1 is a diagram 1 of an electric vehicle according to an embodiment of this application. As shown in FIG. 1, an electric vehicle 10 includes a plurality of motors 11, a plurality of three-phase bridge arms 12, a power battery 13, and a wheel 14. The plurality of motors 11 are in a one-to-one correspondence with the plurality of three-phase bridge arms 12. The motor 11 may be a drive motor, a generator, a compressor, or the like. A three-phase bridge arm 12 corresponding to the drive motor is configured to receive power supplied by the power battery 13 to drive the wheel 14 or is configured to heat the power battery 13. A three-phase bridge arm 12 corresponding to the generator is configured to convert kinetic energy of the electric vehicle 10 into electric energy, to drive the motor to supply power to drive the wheel 14, charge the power battery 13, or heat the power battery 13. A three-phase bridge arm 12 corresponding to the compressor is configured to receive power supplied by the power battery 13 to drive a cooling system in the vehicle or is configured to heat the power battery 13. It should be noted that a specific type of the motor 11 is not specifically limited in this application.

FIG. 2 is a diagram 2 of an electric vehicle according to an embodiment of this application. As shown in FIG. 2, a three-phase bridge arm 12 receives a direct current of a power battery 13, converts the direct current into a three-phase alternating current, and then supplies power to a motor 11. The motor 11 is connected to the wheel 14 by using a reducer or a speed converter through transmission. In a traveling process of an electric vehicle 10, torque of the motor 11 is transmitted to the wheel 14 to provide power for the electric vehicle 10.

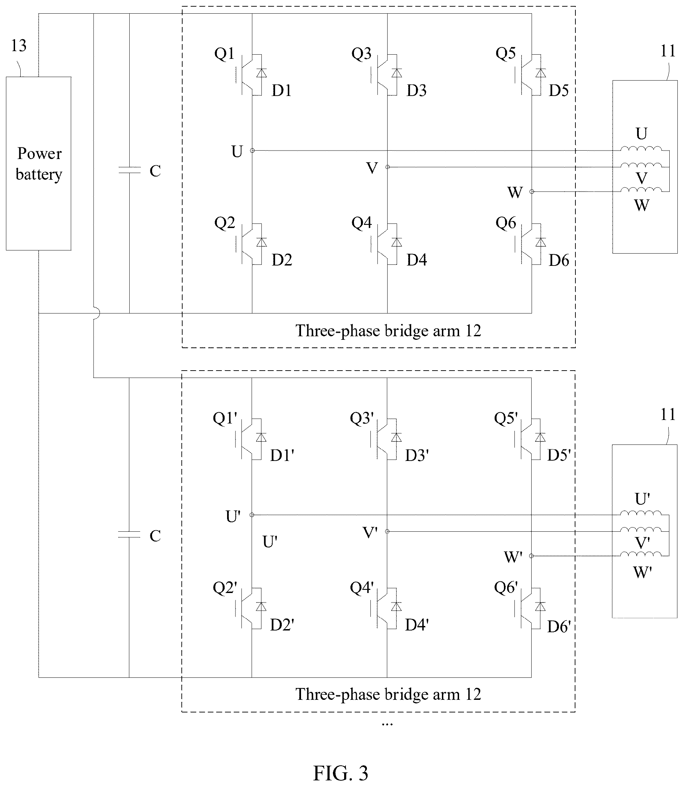

FIG. 3 is a diagram 1 of a connection between a three-phase bridge arm and a motor according to an embodiment of this application. As shown in FIG. 3, one end of each bus capacitor C is configured to connect to a positive electrode of a power battery 13, and the other end of each bus capacitor C is configured to connect to a negative electrode of the power battery 13. Each three-phase bridge arm 12 includes three switching transistor bridge arms. Two ends of each switching transistor bridge arm are respectively connected to two ends of a corresponding bus capacitor C. Each bridge arm midpoint of each switching transistor bridge arm is configured to connect to a phase winding of a corresponding motor 11. Two ends of the three-phase bridge arm 12 are respectively connected to the positive electrode and the negative electrode of the power battery 13, to form a pulse-heating loop of the power battery 13.

Still refer to FIG. 3. The three bridge arms included in the three-phase bridge arm 12 may be respectively denoted as a U-phase bridge arm, a V-phase bridge arm, and a W-phase bridge arm. In the U-phase bridge arm, an upper bridge switching transistor is a switching transistor $Q_1$, and a lower bridge switching transistor is a switching transistor $Q_2$. In the V-phase bridge arm, an upper bridge switching transistor is a switching transistor $Q_3$, and a lower bridge switching transistor is a switching transistor $Q_4$. In the W-phase bridge arm, an upper bridge switching transistor is a switching transistor $Q_5$, and a lower bridge switching transistor is a switching transistor $Q_6$. One end of each bridge arm is configured to connect to one end of the power battery 13. To be specific, a collector of the switching transistor $Q_1$, a collector of the switching transistor $Q_3$, and a collector of the switching transistor $Q_5$ are connected to the one end of the power battery 13. The other end of each bridge arm is connected to the other end of the power battery 13. To be specific, an emitter of the switching transistor $Q_2$, an emitter of the switching transistor $Q_4$, and an emitter of the switching transistor $Q_6$ are connected to the other end of the power battery 13. Optionally, the one end of the power battery 13 may be a positive electrode end of the power battery 13, and the other end of the power battery 13 may be a negative electrode end of the power battery 13. Alternatively, the one end of the power battery 13 may be a negative electrode end of the power battery 13, and the other end of the power battery 13 may be a positive electrode end of the power battery 13.

Optionally, the upper bridge switching transistor may be an insulated gate bipolar transistor (insulated gate bipolar transistor, IGBT) and an anti-parallel diode thereof, a metal-oxide-semiconductor field-effect transistor (metal-oxide-semiconductor field-effect transistor, MOSFET), or the like. A specific structure inside the upper bridge switching transistor is not specifically limited in this application. Optionally, the lower bridge switching transistor may be an IGBT and an anti-parallel diode thereof, or an MOSFET. A specific structure inside the lower bridge switching transistor is not specifically limited in this application.

An upper bridge switching transistor of one of the three bridge arms and lower bridge switching transistors of the other two bridge arms are controlled to be periodically turned on, so that the power battery 13, the one turned-on upper bridge switching transistor, a two-phase winding of the motor 11, and the two turned-on lower bridge switching transistors form a discharge loop. Internal resistance of the power battery 13 generates heat under an action of a pulse current in the discharge loop, to heat the power battery 13. Alternatively, a lower bridge switching transistor of one of the three bridge arms and upper bridge switching transistors of the other two bridge arms are periodically turned on, so that the power battery 13, the one turned-on lower bridge switching transistor, a two-phase winding of the motor 11, and the two turned-on upper bridge switching transistors form a discharge loop. The internal resistance of the power battery 13 generates heat under an action of a pulse current in the discharge loop, to heat the power battery 13.

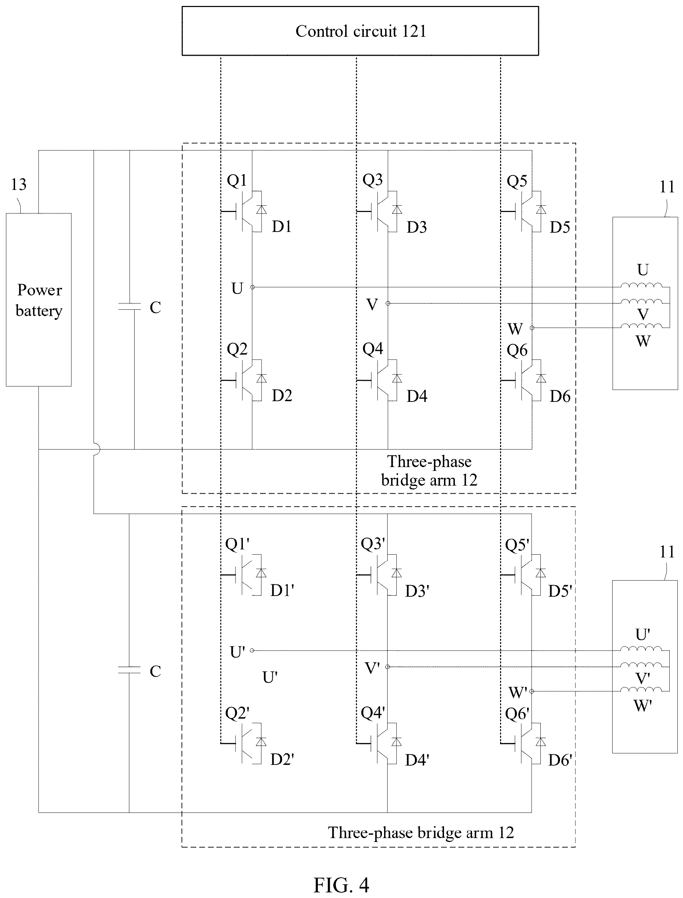

FIG. 4 is a diagram 2 of a connection between a three-phase bridge arm and a motor according to an embodiment of this application. An electric vehicle 10 further includes a control circuit 121. The control circuit 121 is configured to control, by using a control signal, an upper bridge switching transistor of one of three bridge arms and lower bridge switching transistors of the other two bridge arms to be periodically turned on, so that a power battery 13, the one turned-on upper bridge switching transistor, a two-phase winding of the motor, and the two turned-on lower bridge switching transistors form a discharge loop. Internal resistance of the power battery 13 generates heat under an action of a current in the discharge loop, to heat the power battery 13. Alternatively, a lower bridge switching transistor of one of the three bridge arms and upper bridge switching transistors of the other two bridge arms are periodically turned on, so that the power battery 13, the one turned-on lower bridge switching transistor, the two-phase winding of the motor, and the two turned-on upper bridge switching transistors form a discharge loop. The internal resistance of the power battery 13 generates heat under an action of a current in the discharge loop, to heat the power battery 13. The control signal is used to indicate a direct-axis current component and a quadrature-axis current component of the three-phase current. The direct-axis current component is used to control a direction and a strength of a magnetic field generated by the motor 11, and the quadrature-axis current component is used to control torque output by the motor 11.

For example, the control circuit 121 may include but is not limited to a central processing unit (central processing unit, CPU), another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The control circuit 121 may output control signals to bridge arms of the three-phase bridge arm 12, to control switches in bridge arms to be turned on or turned off. The control signal may be a pulse width modulation (pulse width modulation, PWM) signal. For example, the control circuit 121 may be connected to gates of switching transistors of the three bridge arms of the three-phase bridge arm 12, to control switching transistors of the three-phase bridge arm 12 to be turned on or turned off. In some application scenarios, the control circuit 121 may generate control signals of switching transistors of the three bridge arms with reference to a space vector pulse width modulation (space vector pulse width modulation, SVPWM) technology.

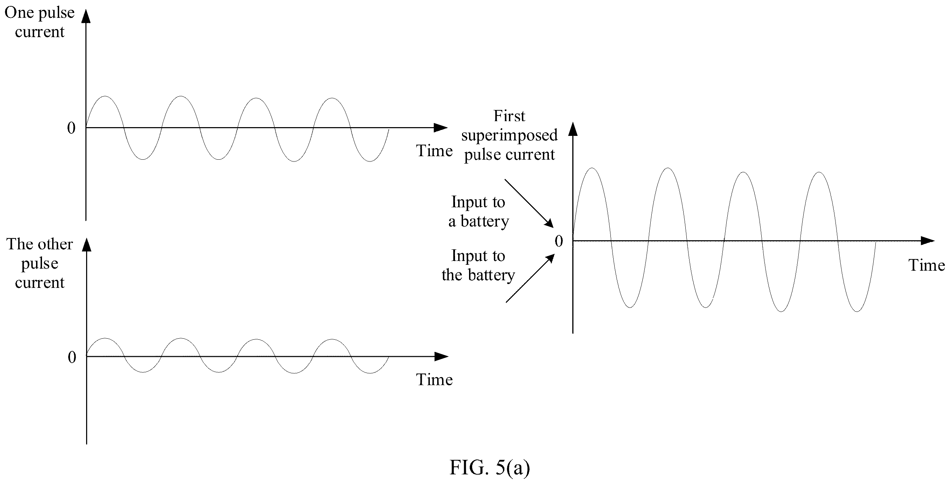

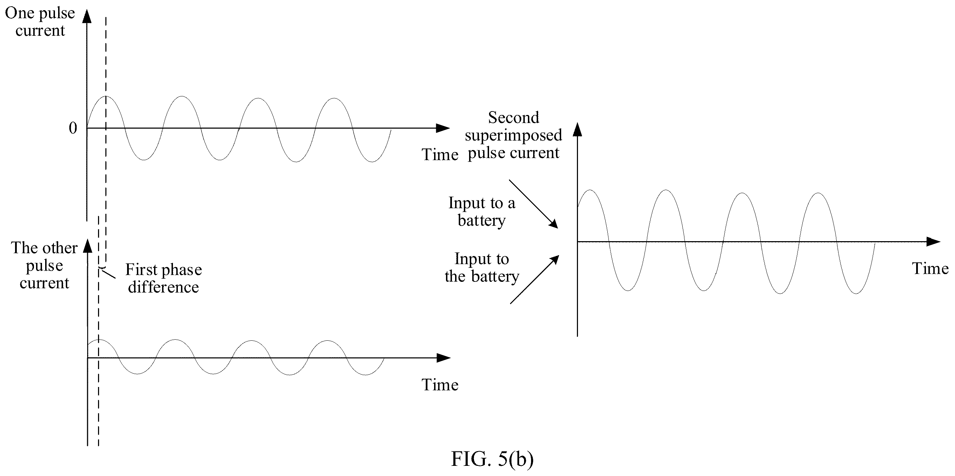

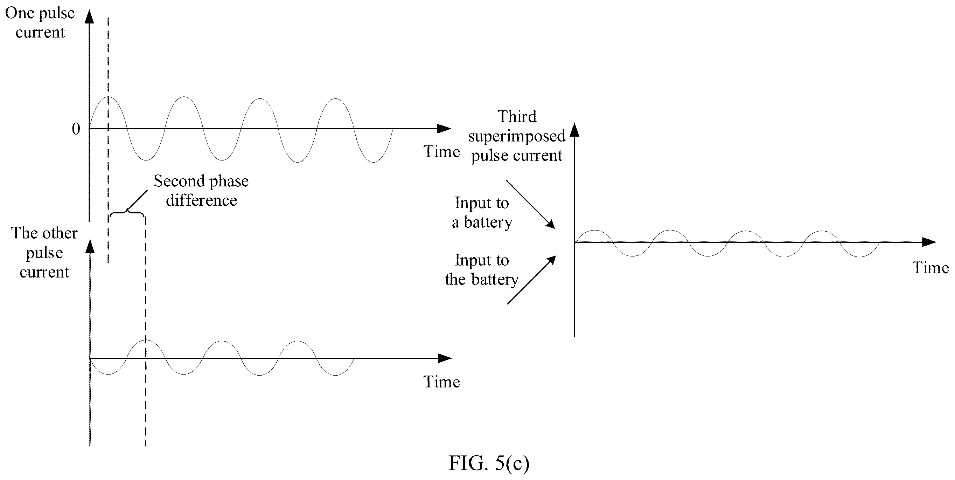

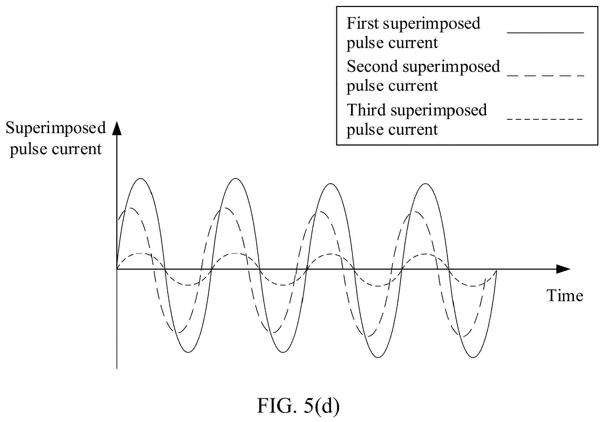

FIG. 5(a) to FIG. 5(c) are schematic diagrams of a superimposed pulse current of one pulse current and the other pulse current input to the power battery 13. As shown in FIG. 5(a), when there is no phase difference between the two pulse currents input to the power battery 13, the superimposed pulse current input to the power battery 13 is a first superimposed pulse current. As shown in FIG. 5(b), when there is a first phase difference between the two pulse currents input to the power battery 13, the superimposed pulse current input to the power battery 13 is a second superimposed pulse current. As shown in FIG. 5(c), when there is a second phase difference between the two pulse currents input to the power battery 13, the superimposed pulse current input to the power battery 13 is a third superimposed pulse current. FIG. 5(d) is a diagram of comparison of the superimposed pulse currents in FIG. 5(a) to FIG. 5(c). When there is a large phase difference between the pulse currents flowing into the power battery 13, directions may affect each other, and intensities may affect each other. Heating power of the power battery 13 is positively correlated with amplitudes of the pulse currents. Therefore, if the two pulse currents have opposite directions or amplitudes (for example, in the case of the third superimposed pulse current), the two pulse currents may even cancel each other out, greatly affecting heating efficiency of the power battery 13.

It can be learned from FIG. 5(a) that a problem of a phase difference between pulse currents needs to be resolved, to enable heating efficiency of the power battery 13 to be high. For minimization of the phase difference between the pulse currents, frequencies of pulse currents generated by the plurality of three-phase bridge arms 12 are usually the same. Nevertheless, there are still many causes of a phase difference between the pulse currents generated by the plurality of three-phase bridge arms 12. For example, when the three-phase bridge arms 12 input the pulse currents to the power battery 13, phase delays are caused due to hardware. Because the phase delays are different, there is the phase difference between the pulse currents. For another example, when control signals are delivered to the three-phase bridge arms 12, because the control signals are delivered at different moments, there is the phase difference between the pulse currents generated by three-phase bridge arms 12.

Therefore, phases of the pulse currents generated by the three-phase bridge arms 12 need to be monitored. When it is detected that there is the phase difference between the pulse currents generated by the three-phase bridge arms 12, a pulse current output by at least one of the plurality of three-phase bridge arms 12 is adjusted to reduce the phase difference between the pulse currents generated by the plurality of three-phase bridge arms 12.

A switching frequency of a switching transistor of the at least one of the plurality of three-phase bridge arms 12 is adjusted, so that the phase difference between the pulse currents generated by the plurality of three-phase bridge arms 12 can be reduced. Specifically, frequencies with which an upper-bridge switching transistor of one bridge arm of the at least one of the plurality of three-phase bridge arms 12 and lower-bridge switching transistors of the other two bridge arms are periodically turned on are adjusted, or frequencies with which a lower-bridge switching transistor of one bridge arm of the at least one of the plurality of three-phase bridge arms 12 and upper-bridge switching transistors of the other two bridge arms are periodically turned on are adjusted, so that the phase difference between the pulse currents generated by the plurality of three-phase bridge arms 12 can be reduced, to improve heating efficiency of the power battery 13.

In addition, when a phase difference between a pulse current generated by another three-phase bridge arm 12 and the pulse current generated by the at least one three-phase bridge arm 12 is greater than a preset value, a switching frequency of a switching transistor of the another three-phase bridge arm 12 is controlled, so that the phase difference between the pulse current generated by the another three-phase bridge arm 12 and the pulse current generated by the at least one three-phase bridge arm 12 can also be reduced, to reduce the phase difference between the pulse currents.

An excessively small phase difference between the three-phase bridge arms 12 is difficult to measure. Therefore, in a possible implementation, the control method includes: when a phase difference between pulse currents generated by any two of the plurality of three-phase bridge arms 12 is greater than the preset value, adjusting a switching frequency of a switching transistor of at least one of the any two three-phase bridge arms 12 to reduce the phase difference between the pulse currents output by the two three-phase bridge arms 12.

When there is a small phase difference between the pulse currents generated by the three-phase bridge arms 12, directions and intensities of the pulse currents flowing into the power battery 13 are not greatly affected. However, when the phase difference between the pulse currents generated by the any two three-phase bridge arms 12 is greater than the preset value, there is a specific cancellation. Therefore, in this case, the switching frequency of the switching transistor of the at least one of the any two three-phase bridge arms 12 is adjusted to reduce the phase difference between the pulse currents output by the two three-phase bridge arms 12. For example, the preset value corresponding to the phase difference between the pulse currents may be 10°. A person skilled in the art may set the preset value of the phase difference as desired based on measurement precision and heating efficiency. This is not specifically limited herein.

A phase of a current is difficult to detect. Therefore, in response to that a difference between current values, at a same moment, of the pulse currents generated by the any two of the plurality of three-phase bridge arms 12 is greater than the preset value, the switching frequency of the switching transistor of the at least one of the any two three-phase bridge arms 12 is adjusted to reduce the phase difference between the pulse currents output by the two three-phase bridge arms 12.

If amplitudes of the pulse currents output by all of the three-phase bridge arms 12 are the same, preset values corresponding to the two three-phase bridge arms 12 may be the same. If amplitudes of the pulse currents output by all of the three-phase bridge arms 12 are not completely the same, different preset values may be set. A person skilled in the art may set different preset values based on different current value differences corresponding to different phase differences. Details are not described herein.

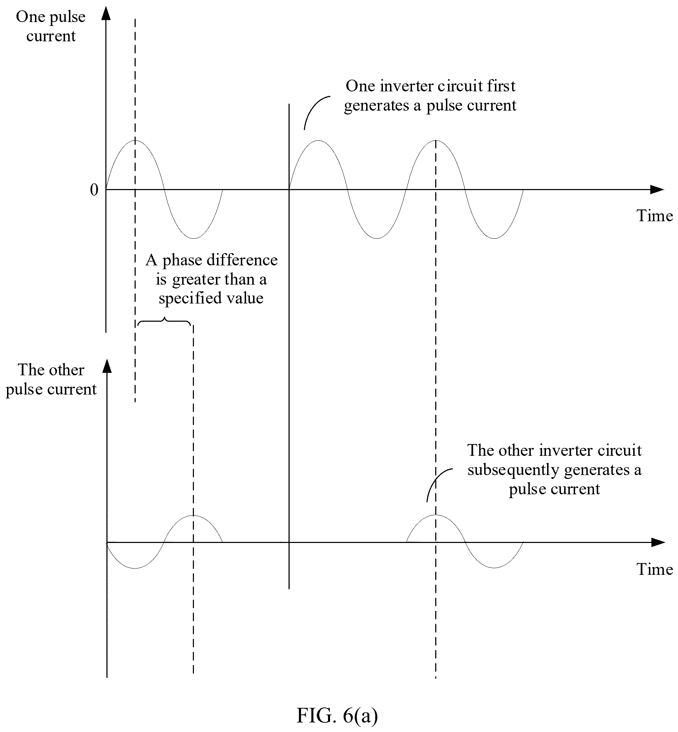

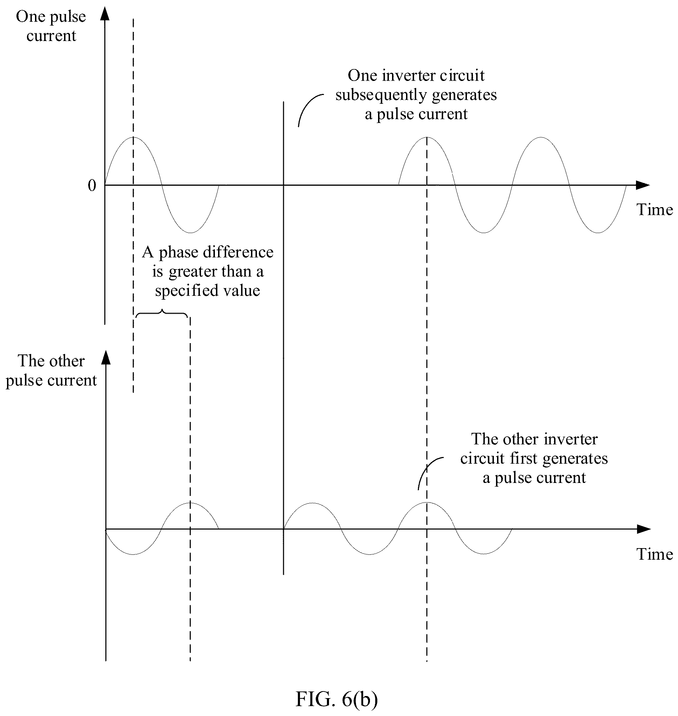

In addition, when the phase difference between the pulse currents generated by the any two three-phase bridge arms 12 is greater than the preset value, a sequence in which the three-phase bridge arms 12 generate the pulse currents may further be adjusted to reduce the phase difference between the pulse currents output by the two three-phase bridge arms 12. As shown in FIG. 6(a) and FIG. 6(b), in a possible implementation, the at least one of the plurality of three-phase bridge arms 12 is controlled to first generate a pulse current, and the another three-phase bridge arm 12 other than the at least one three-phase bridge arm 12 is controlled to subsequently generate a pulse current. Alternatively, the another three-phase bridge arm 12 other than the at least one three-phase bridge arm 12 is controlled to first generate a pulse current, and the at least one of the plurality of three-phase bridge arms 12 is controlled to subsequently generate a pulse current. In this way, the phase difference between the pulse currents output by the plurality of three-phase bridge arms 12 can also be reduced.

In this way, the phase difference between the pulse currents generated by the two three-phase bridge arms 12 can also be reduced, to improve heating efficiency of the power battery 13.

Bridge arm midpoints of three phase bridge arms of each three-phase bridge arm 12 are configured to output a three-phase current. The three-phase current includes a U-phase current, a V-phase current, and a W-phase current. The U-phase current, the V-phase current, and the W-phase current jointly form a pulse current. Frequencies of the three-phase current and the pulse current are the same. Therefore, whether a phase difference between pulse currents generated by any two three-phase bridge arms 12 is greater than a preset value can also be determined by detecting a phase difference between currents in a same phase that correspond to the two three-phase bridge arms 12.

In a possible implementation, in response to that a phase difference between U-phase currents output by any two of the plurality of three-phase bridge arms 12, a phase difference between V-phase currents output by any two of the plurality of three-phase bridge arms 12, or a phase difference between W-phase currents output by any two of the plurality of three-phase bridge arms 12 is greater than a preset value, a switching frequency of a switching transistor of at least one of the any two three-phase bridge arms 12 is adjusted to reduce the phase difference between the U-phase currents, the phase difference between the V-phase currents, and the phase difference between the W-phase currents output by the any two three-phase bridge arms 12. A waveform of each phase current of the three-phase current may be a unipolar triangular wave.

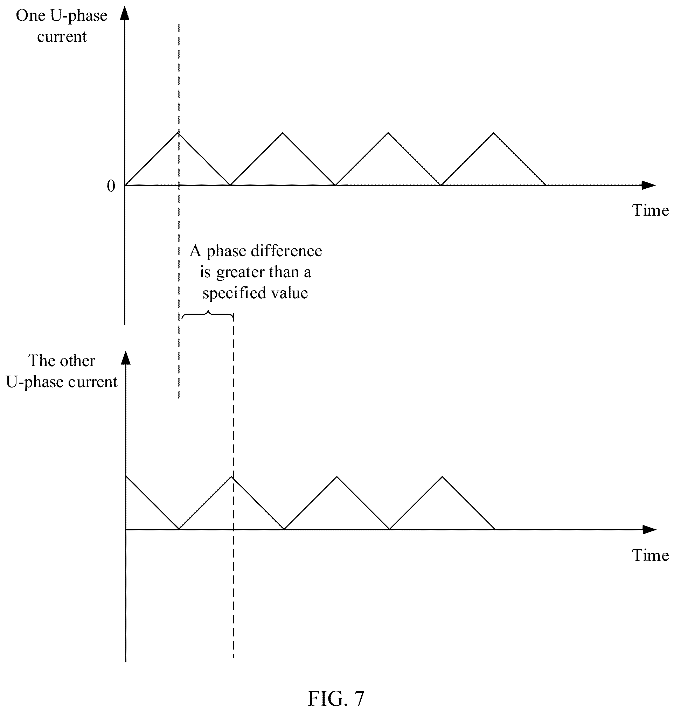

FIG. 7 is a diagram of phase currents. For example, phases of the U-phase currents output by the any two three-phase bridge arms 12 are compared. When the phase difference between the U-phase currents output by the any two three-phase bridge arms 12 is greater than the preset value, the switching frequency of the switching transistor of the at least one of the any two three-phase bridge arms 12 may be adjusted to reduce the phase difference between the U-phase currents output by the any two three-phase bridge arms 12.

The three-phase current is a current corresponding to a winding in the motor 11. Therefore, during output of currents to a direct axis of the motor 11, a motor controller needs to convert, through inverse Park transformation, a direct-axis current into a three-phase current: a U-phase current, a V-phase current, and a W-phase current, and feed the U-phase current, the V-phase current, and the W-phase current into the winding of the motor.

A phase of a current is difficult to detect. Therefore, when a difference between current values, at a same moment, of the U-phase currents generated by the any two of the plurality of three-phase bridge arms 12, a difference between current values, at a same moment, of the V-phase currents generated by the any two of the plurality of three-phase bridge arms 12, or a difference between current values, at a same moment, of the W-phase currents generated by the any two of the plurality of three-phase bridge arms 12 is greater than a preset value, the switching frequency of the switching transistor of the at least one of the any two three-phase bridge arms 12 is adjusted to reduce the phase difference between the U-phase currents, the phase difference between the V-phase currents, and the phase difference between the W-phase currents output by the any two three-phase bridge arms 12.

If amplitudes of U-phase currents output by all of the three-phase bridge arms 12 are the same, amplitudes of V-phase currents output by all of the three-phase bridge arms 12 are the same, or amplitudes of W-phase currents output by all of the three-phase bridge arms 12 are the same, preset values corresponding to the two three-phase bridge arms 12 may be the same. If amplitudes of U-phase currents output by all of the three-phase bridge arms 12 are not completely the same, amplitudes of V-phase currents output by all of the three-phase bridge arms 12 are not completely the same, or amplitudes of W-phase currents output by all of the three-phase bridge arms 12 are not completely the same, different preset values may be set. A person skilled in the art may also set different preset values based on different current value differences corresponding to different phase differences. Details are not described herein.

A direct-axis current component is used to control a direction and a strength of a magnetic field generated by the motor 11. The direction and the strength of the magnetic field generated by the motor 11 are controlled, so that a magnitude and a direction of the pulse current can be adjusted. Specifically, the direct-axis current component may be determined based on heating power of the power battery 13 indicated by a heating instruction. The direct-axis current component includes two parts of parameters: one part is a frequency and an amplitude of the direct-axis current, and the other part is a bias of the direct-axis current. Optionally, the direct-axis current component may include a voltage reference signal and a direct-axis bias signal. The voltage reference signal is used to indicate a frequency and an amplitude of a voltage, and the direct-axis bias signal is used to enable the voltage to generate a direct current bias. To be specific, the direct-axis current signal having the direct current bias is input to a control circuit 121, to enable the control circuit 121 to generate a control signal based on the direct-axis current signal, and drive the motor 11 by using the control signal. The direct-axis current signal having the direct current bias can improve an effective value of the three-phase current of the motor 11, to improve heating efficiency of the power battery 13. It should be noted that the direct current bias of the direct-axis current signal may be a positive direct current bias, or may be a negative direct current bias. A person in the art may separately set the direct current bias according to a requirement for heating power.

A quadrature-axis current component is used to control torque output by the motor 11. In a high-frequency pulse-heating process of the power battery 13, if the quadrature-axis current component of the motor 11 is not less than a preset value, the motor 11 may generate unexpected torque output. The unexpected torque of the motor 11 is transmitted to the wheel 12, so that the electric vehicle 10 generates vibration and noise, affecting ride experience of the electric vehicle 10. Therefore, in this application, the quadrature-axis current component of the pulse current of the three-phase current output by the three-phase bridge arm 12 is less than the preset value, or the quadrature-axis current component is zero, to avoid affecting ride experience of the electric vehicle 10 due to vibration and noise generated through the unexpected torque being transmitted to the wheel.

(a) in FIG. 8 is a diagram of a waveform of a voltage indicated by a voltage reference signal, and an example in which a waveform of the voltage reference signal is a square wave is used. (b) in FIG. 8 is a diagram of a waveform of a bias voltage indicated by a direct-axis bias signal. (c) in FIG. 8 is a diagram of a waveform of a voltage reference signal having a direct current bias. The waveform shown by (c) in FIG. 8 is formed by superimposing the voltage signal in (a) in FIG. 8 and (b) in FIG. 8.

As shown in FIG. 9, the control circuit 121 includes a quadrature-axis current controller 901, a direct-axis current controller 902, and a drive circuit 903. In this embodiment of this application, the control circuit 121 is configured to: receive a heating instruction, and determine, based on heating power of the power battery 13 indicated by the heating instruction, that the quadrature-axis current controller 901 determines a quadrature-axis current component, and the direct-axis current controller 902 determines a direct-axis current component. The drive circuit 903 may include a Park transformation (Park's transmission) module and a Clarke transformation (Clarke's transmission) module. The Park transformation module is configured to convert two components in an $\alpha\beta$ coordinate system into a rotating orthogonal coordinate system (dq). The Clarke transformation module converts a time domain component of a three-phase system (in an abc coordinate system) into two components in a stationary orthogonal coordinate system ($\alpha\beta$). In this embodiment of this application, the Park transformation module receives a quadrature-axis current signal Uq and a direct-axis current signal Ud, performs inverse Park transformation on the signals Uq and Ud in the direct axis-quadrature axis coordinate system to obtain voltage signals U$\alpha$ and U$\beta$ in the $\alpha\beta$ coordinate system, and generates a PWM control signal based on the U$\alpha$ and U$\beta$ signals, where the control signal is used to control a turned-on frequency and a duty cycle of the switching transistor of the three-phase bridge arm 12.

In a possible implementation, in response to that a phase difference between pulse currents generated by any two of the plurality of three-phase bridge arms 12 is greater than a preset value, or a phase difference between U-phase currents output by the any two three-phase bridge arms 12, a phase difference between V-phase currents output by the any two three-phase bridge arms 12, or a phase difference between W-phase currents output by the any two three-phase bridge arms 12 is greater than the preset value, a frequency of a direct-axis current component of a three-phase current output by at least one of the any two three-phase bridge arms 12 is adjusted.

The direct-axis current component of the three-phase current output by the three-phase bridge arm 12 is determined by a voltage reference signal and a direct-axis bias signal. FIG. 10(a) and FIG. 10(b) are diagrams of the voltage reference signal. The voltage reference signal is used to indicate a frequency and an amplitude of a voltage. Therefore, a frequency of the voltage reference signal is adjusted, so that a frequency of the direct-axis current component of the pulse current can be adjusted. It can be seen from FIG. 10(a) and FIG. 10(b) that, when in response to a phase difference between pulse currents generated by any two of the plurality of three-phase bridge arms 12 is greater than the preset value or the phase difference between the U-phase currents output by the any two three-phase bridge arms 12, the phase difference between the V-phase currents output by the any two three-phase bridge arms 12, or the phase difference between the W-phase currents output by the any two three-phase bridge arms 12 is greater than the preset value, the frequency of the voltage reference signal is adjusted, so that phases of the U-phase current, the V-phase current, the W-phase current, and the pulse current can be adjusted. In this way, a phase difference between the U-phase currents output by the any two three-phase bridge arms 12 can be reduced, to improve heating efficiency of the power battery 13.

As shown in FIG. 10(a), when there is a phase difference between two pulse currents (or a phase difference between the U-phase currents, a phase difference between the V-phase currents, or a phase difference between the W-phase currents) input to the power battery 13, a frequency (a frequency of a direct-axis current component of a three-phase current) of a voltage indicated by a voltage reference signal corresponding to one of the three-phase bridge arms 12 is increased, so that a frequency of a direct-axis current component of a pulse current generated by one of the three-phase bridge arms 12 can be increased. In this way, the phase difference between the pulse currents generated by the two three-phase bridge arms 12 is reduced, to improve heating efficiency of the power battery 13. As shown in FIG. 10(b), when there is a phase difference between two pulse currents (or a phase difference between the U-phase currents, a phase difference between the V-phase currents, or a phase difference between the W-phase currents) input to the power battery 13, the frequency (the frequency of a direct-axis current component of a three-phase current) of a voltage indicated by a voltage reference signal corresponding to one of the three-phase bridge arms 12 is decreased, so that the frequency of a direct-axis current component of a pulse current generated by one of the three-phase bridge arms 12 can be decreased. In this way, the phase difference between the pulse currents generated by the two three-phase bridge arms 12 is reduced, to improve heating efficiency of the power battery 13. Similarly, increasing/decreasing a frequency of a voltage indicated by a voltage reference signal corresponding to the other three-phase bridge arm 12 can also reduce the phase difference between the pulse currents generated by the two three-phase bridge arms 12, to improve heating efficiency of the power battery 13. Details are not described herein again.

After the frequency of the voltage indicated by the voltage reference signal corresponding to one/the other three-phase bridge arm 12 is increased/decreased, to ensure that no phase difference is generated between pulse currents subsequently generated by the two three-phase bridge arms 12, in a possible implementation, the control method includes: when the phase difference between the pulse currents generated by the any two of the plurality of three-phase bridge arms 12 is less than or equal to the preset value and the phase difference between the U-phase currents output by the any two three-phase bridge arms 12, the phase difference between the V-phase currents output by the any two three-phase bridge arms 12, or the phase difference between the W-phase currents output by the any two three-phase bridge arms 12 is less than or equal to the preset value, controlling a frequency of a direct-axis current component of the three-phase current output by each three-phase bridge arm 12 to be a preset frequency.

If frequencies of the two pulse currents are different, even though a phase difference between pulse currents generated by the two three-phase bridge arms 12 is less than or equal to the preset value in this cycle, a phase difference between pulse currents generated by the two three-phase bridge arms 12 may not be less than or equal to the preset value in a next cycle. Therefore, once the phase difference between the pulse currents generated by the any two of the plurality of three-phase bridge arms 12 is less than or equal to the preset value and the phase difference between the U-phase currents output by the any two three-phase bridge arms 12, the phase difference between the V-phase currents output by the any two three-phase bridge arms 12, or the phase difference between the W-phase currents output by the any two three-phase bridge arms 12 is less than or equal to the preset value, a frequency of a direct-axis current component of the three-phase current output by each three-phase bridge arm 12 may be controlled to be a preset frequency. The preset frequency may be a frequency existing before the direct-axis current component is adjusted, or may be another preset frequency. In other words, after the phase difference between the pulse currents generated by the any two of the plurality of three-phase bridge arms 12 is less than or equal to the preset value and the phase difference between the U-phase currents output by the any two three-phase bridge arms 12, the phase difference between the V-phase currents output by the any two three-phase bridge arms 12, or the phase difference between the W-phase currents output by the any two three-phase bridge arms 12 is less than or equal to the preset value, it is only necessary to ensure that frequencies of the direct-axis current components of the three-phase current output by each three-phase bridge arm 12 are the same.

As shown in FIG. 11(a), when there is a phase difference between two pulse currents (or a phase difference between the U-phase currents, a phase difference between the V-phase currents, or a phase difference between the W-phase currents) input to the power battery 13, a frequency (a frequency of a direct-axis current component of a three-phase current) of a voltage indicated by a voltage reference signal corresponding to one of the three-phase bridge arms 12 is increased, so that a frequency of a direct-axis current component of a pulse current generated by one of the three-phase bridge arms 12 can be increased. In this way, the phase difference between the pulse currents generated by the two three-phase bridge arms 12 is reduced.

When the phase difference between the two pulse currents input to the power battery 13 is less than or equal to the preset value (the preset value in FIG. 11(a) is 0°), the frequency of a voltage indicated by a voltage reference signal corresponding to one of the three-phase bridge arms 12 is adjusted to control the frequency of a direct-axis current component of a three-phase current output by each three-phase bridge arm 12 to be a preset frequency, so that generating a phase difference again between pulse currents subsequently generated is avoided.

As shown in FIG. 11(b), when there is a phase difference between two pulse currents input to the power battery 13, the frequency (the frequency of a direct-axis current component of a three-phase current) of a voltage indicated by a voltage reference signal corresponding to one of the three-phase bridge arms 12 is decreased, so that the frequency of a direct-axis current component of a pulse current generated by one of the three-phase bridge arms 12 can be decreased. In this way, the phase difference between the pulse currents generated by the two three-phase bridge arms 12 is reduced. In addition, when the phase difference between the two pulse currents input to the power battery 13 is less than or equal to the preset value, the frequency of a voltage indicated by a voltage reference signal corresponding to one of the three-phase bridge arms 12 is adjusted to control the frequency of a direct-axis current component of the three-phase current output by each three-phase bridge arm 12 to be the preset frequency. Similarly, after a frequency of a voltage indicated by a voltage reference signal corresponding to the other three-phase bridge arm 12 is increased/decreased, if the phase difference between the pulse currents generated by the two three-phase bridge arms 12 is less than or equal to the preset value again, the frequency of the direct-axis current component of the three-phase current output by each three-phase bridge arm 12 may be controlled to be the preset frequency, to avoid generating a phase difference again between pulse currents subsequently generated.

In a possible implementation, the control method for reducing the phase difference includes: first outputting a first control signal to control a three-phase bridge arm 12 corresponding to the motor 11 to output the three-phase current, and subsequently outputting a second control signal to control a three-phase bridge arm 12 corresponding to another motor to output the three-phase current. Frequencies of direct-axis current components of the three-phase currents indicated by the first control signal and the second control signal are the same.

Due to a transmission delay problem caused by different transmission path lengths, even if a control signal is sent to the three-phase bridge arm 12 corresponding to the motor 11 and the three-phase bridge arm 12 corresponding to the another motor at a same moment by using a DSP-to-DSP hardware communication channel, a phase difference may also be generated between pulse currents finally generated by the three-phase bridge arm 12 corresponding to the motor 11 and the three-phase bridge arm 12 corresponding to the another motor. Therefore, the first control signal may be first output to control the three-phase bridge arm 12 corresponding to the motor 11 to output the three-phase current, and subsequently the second control signal is output to control the three-phase bridge arm 12 corresponding to the another motor to output the three-phase current. In this way, a problem caused by a transmission delay can be reduced, and the phase difference output by three-phase bridge arms 12 is reduced, to improve heating efficiency of the power battery 13.

As shown in FIG. 12, the electric vehicle 10 provided in embodiments of this application includes a heat exchange loop 15. According to thermal effect of the current, the three-phase current on the motor 11 may enable a three-phase winding of the motor 11 to heat up. The heat exchange loop 15 is configured to conduct heat generated on the three-phase winding of the motor 11 to the power battery 13, to conduct heat generated on a winding of a motor in a pulse-heating process of the power battery 13 to the power battery 13, to improve energy utilization efficiency, save energy, and improve heating efficiency of the power battery 13.

In an embodiment, as shown in FIG. 13, the heat exchange loop 15 includes a heat transfer medium, a heat transfer medium flow loop, a liquid pump 1301, and a heat exchanger 1302. The heat transfer medium is configured to absorb the heat generated on the winding of the motor 11. The heat transfer medium flows in the heat transfer medium flow loop. The liquid pump 1301 is configured to provide power for flow of the heat transfer medium. The heat exchanger 1302 is configured to absorb the heat in the heat transfer medium and conduct the absorbed heat in the heat transfer medium to the power battery 13, to heat the power battery 13.

It is clear that a person skilled in the art can make various modifications and variations to this application without departing from the spirit and scope of this application. This application is intended to cover these modifications and variations of this application provided that they fall within the scope of protection defined by claims and their equivalent technologies.

## Claims

1. A method for pulse-heating a power battery of an electric vehicle, wherein the electric vehicle comprises a plurality of motors and a plurality of three-phase bridge arms, three bridge arm midpoints of each three-phase bridge arm are configured to connect to a three-phase winding of one motor, each three-phase bridge arm is configured to connect to the power battery through a direct current bus, and the control method comprises:

controlling each three-phase bridge arm to be configured to generate a pulse current on the direct current bus, wherein the pulse current is used to heat the power battery; and
adjusting a switching frequency of a switching transistor of at least one of the plurality of three-phase bridge arms to reduce a phase difference between pulse currents generated by the plurality of three-phase bridge arms.

2. The method according to claim 1, wherein the method comprises:
in response to that a phase difference between pulse currents generated by any two of the plurality of three-phase bridge arms is greater than a preset value, adjusting a switching frequency of a switching transistor of at least one of the any two three-phase bridge arms to reduce the phase difference between the pulse currents output by the two three-phase bridge arms.

3. The method according to claim 1 or 2, wherein the method comprises:
controlling the at least one of the plurality of three-phase bridge arms to first generate a pulse current, and controlling another three-phase bridge arm other than the at least one three-phase bridge arm to subsequently generate a pulse current; or controlling another three-phase bridge arm other than the at least one three-phase bridge arm to first generate a pulse current, and controlling the at least one of the plurality of three-phase bridge arms to subsequently generate a pulse current.

4. The method according to claim 3, wherein the method comprises:
controlling a switching frequency of a switching transistor of the another three-phase bridge arm to reduce a phase difference between the pulse current generated by the another three-phase bridge arm and the pulse current generated by the at least one three-phase bridge arm.

5. The method according to claim 3, wherein the method comprises:
in response to that a phase difference between the pulse current generated by the another three-phase bridge arm and the pulse current generated by the at least one three-phase bridge arm is greater than the preset value, controlling a switching frequency of a switching transistor of the another three-phase bridge arm to reduce the phase difference between the pulse current generated by the another three-phase bridge arm and the pulse current generated by the at least one three-phase bridge arm.

6. The method according to any one of claims 2 to 4, wherein the at least one three-phase bridge arm is a three-phase bridge arm corresponding to a drive motor, the drive motor is configured to connect to a wheel of the electric vehicle through transmission, and the another three-phase bridge arm is a three-phase bridge arm corresponding to a motor other than the drive motor in the plurality of motors.

7. The method according to claim 1, wherein the bridge arm midpoints of each three-phase bridge arm are configured to output a three-phase current, the three-phase current comprises a U-phase current, a V-phase current, and a W-phase current, and the control method comprises:
in response to that a phase difference between U-phase currents output by any two of the plurality of three-phase bridge arms, a phase difference between V-phase currents output by any two of the plurality of three-phase bridge arms, or a phase difference between W-phase currents output by any two of the plurality of three-phase bridge arms is greater than a preset value, adjusting a switching frequency of a switching transistor of at least one of the any two three-phase bridge arms to reduce the phase difference between the U-phase currents, the phase difference between the V-phase currents, and the phase difference between the W-phase currents output by the any two three-phase bridge arms.

8. The method according to claim 7, wherein a frequency of the three-phase current is the same as a frequency of the pulse current.

9. The method according to claim 7 or 8, wherein the control method comprises:
in response to that a phase difference between pulse currents generated by the any two of the plurality of three-phase bridge arms is greater than the preset value, or the phase difference between the U-phase currents output by the any two three-phase bridge arms, the phase difference between the V-phase currents output by the any two three-phase bridge arms, or the phase difference between the W-phase currents output by the any two three-phase bridge arms is greater than the preset value, adjusting a frequency of a direct-axis current component of a three-phase current output by the at least one of the any two three-phase bridge arms.

10. The method according to claim 7, wherein the control method comprises:
in response to that a phase difference between pulse currents generated by the any two of the plurality of three-phase bridge arms is greater than the preset value, or the phase difference between the U-phase currents output by the any two three-phase bridge arms, the phase difference between the V-phase currents output by the any two three-phase bridge arms, or the phase difference between the W-phase currents output by the any two three-phase bridge arms is greater than the preset value, adjusting a frequency of a direct-axis current component of a three-phase current output by the at least one of the any two three-phase bridge arms until the phase difference between the pulse currents generated by the any two of the plurality of three-phase bridge arms is less than or equal to the preset value, and the phase difference between the U-phase currents, the phase difference between the V-phase currents, and the phase difference between the W-phase currents output by the any two three-phase bridge arms are less than or equal to the preset value.

11. The method according to any one of claims 1 to 10, wherein the control method comprises:
    in response to that the phase difference between the pulse currents generated by the any two of the plurality of three-phase bridge arms is less than or equal to the preset value, and the phase difference between the U-phase currents output by the any two three-phase bridge arms, the phase difference between the V-phase currents output by the any two three-phase bridge arms, or the phase difference between the W-phase currents output by the any two three-phase bridge arms is less than or equal to the preset value, controlling a frequency of a direct-axis current component of the three-phase current output by each three-phase bridge arm to be a preset frequency.

12. The method according to claim 7, wherein the control method comprises:

    first outputting a first control signal to control a three-phase bridge arm corresponding to the drive motor to output the three-phase current, and subsequently outputting a second control signal to control a three-phase bridge arm corresponding to the another motor to output the three-phase current, wherein
    frequencies of direct-axis current components of the three-phase currents indicated by the first control signal and the second control signal are the same.

13. The method according to claim 1, wherein the control method comprises:

    controlling a quadrature-axis current component of a three-phase current output by each three-phase bridge arm to be less than a preset value; or
    controlling a value of torque output by each motor to be less than a preset torque value.

14. The method according to claim 1, wherein the control method comprises:
    controlling frequencies of the pulse currents output by the plurality of three-phase bridge arms to be the same.

15. The method according to claim 9, wherein the adjusting a frequency of a direct-axis current component of a three-phase current output by the three-phase bridge arm comprises:

    increasing the frequency of the direct-axis current component of the three-phase current output by the three-phase bridge arm; or
    reducing the frequency of the direct-axis current component of the three-phase current output by the three-phase bridge arm.

16. An electric vehicle, wherein the electric vehicle comprises a control apparatus, a plurality of motors, and a plurality of three-phase bridge arms in a one-to-one correspondence with the plurality of motors, each three-phase bridge arm comprises three phase bridge arms, bridge arm midpoints of each three-phase bridge arm are configured to connect to a three-phase winding of one motor, each three-phase bridge arm is configured to connect to a power battery through a direct current bus, and the control apparatus is configured to:
    control at least two three-phase bridge arms to generate pulse currents on the direct current bus, wherein frequencies of the pulse currents generated by the at least two three-phase bridge arms on the direct current bus are the same and a phase difference is less than a preset value.

Electric vehicle 10

FIG. 1

FIG. 2

FIG. 3

FIG. 4

FIG. 5(a)

FIG. 5(b)

One pulse
current

0 ──────────────────────── Time

Second phase
difference

The other
pulse
current

Time

Third
superimposed
pulse current

Input to
a battery

Input to
the battery

Time

EP 4 744 954 A1

FIG. 5(c)

| | |
|---|---|
| First superimposed pulse current | _____ |
| Second superimposed pulse current | _ _ _ _ _ |
| Third superimposed pulse current | _ _ _ _ _ _ _ |

Superimposed pulse current

Time

FIG. 5(d)

One pulse
current

One inverter circuit first
generates a pulse current

0

Time

A phase difference
is greater than a
specified value

The other
pulse current

The other inverter circuit
subsequently generates a
pulse current

Time

FIG. 6(a)

One pulse
current

One inverter circuit
subsequently generates
a pulse current

0

Time

A phase difference
is greater than a
specified value

The other
pulse current

The other inverter
circuit first generates
a pulse current

Time

FIG. 6(b)

FIG. 7

Voltage reference signal

(a)

Direct-axis bias signal

(b)

Voltage reference signal having a direct current bias

(c)

FIG. 8

FIG. 9

FIG. 10(a)

Voltage reference signal
corresponding to one inverter circuit

Decrease a frequency

0

Time

One pulse current

0

Time

The other pulse current

Phase difference

Time

FIG. 10(b)

FIG. 11(a)

FIG. 11(b)

FIG. 12

FIG. 13

## INTERNATIONAL SEARCH REPORT

| International application No. |
|---|
| **PCT/CN2024/081471** |

**A. CLASSIFICATION OF SUBJECT MATTER**

B60L 58/27(2019.01)i; B60L 58/25(2019.01)i; B60L 15/08(2006.01)i; B60L 15/20(2006.01)i; H01M 10/615(2014.01)i

According to International Patent Classification (IPC) or to both national classification and IPC

**B. FIELDS SEARCHED**

Minimum documentation searched (classification system followed by classification symbols)

IPC: B60L H01M

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 华为数字能源技术有限公司, 许延坤, 电池, 加热, 脉冲, 电流, 相位, 差, 电机, 电动机, 马达, battery, heat, pulse, current, phase, difference, motor

**C. DOCUMENTS CONSIDERED TO BE RELEVANT**

| Category* | Citation of document, with indication, where appropriate, of the relevant passages | Relevant to claim No. |
|---|---|---|
| X | CN 113858966 A (BYD CO., LTD.) 31 December 2021 (2021-12-31) description, paragraphs [0029]-[0105], and figures 1-8 | 1-8, 14, 16 |
| Y | CN 113858966 A (BYD CO., LTD.) 31 December 2021 (2021-12-31) description, paragraphs [0029]-[0105], and figures 1-8 | 9-13, 15 |
| Y | CN 115782696 A (XIAOMI AUTOMOTIVE TECHNOLOGY CO., LTD.) 14 March 2023 (2023-03-14) description, paragraphs [0053]-[0126], and figures 1-9 | 9-13, 15 |
| A | US 2023163378 A1 (RIVIAN IP HOLDINGS, LLC.) 25 May 2023 (2023-05-25) entire document | 1-16 |
| A | CN 113085516 A (CHONGQING CHANG'AN NEW ENERGY AUTOMOBILE TECHNOLOGY CO., LTD.) 09 July 2021 (2021-07-09) entire document | 1-16 |
| A | CN 113745702 A (BYD CO., LTD.) 03 December 2021 (2021-12-03) entire document | 1-16 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 April 2024** | **12 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/081471** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2021351732 A1 (NIO USA, INC.) 11 November 2021 (2021-11-11)<br>entire document | 1-16 |

Form PCT/ISA/210 (second sheet) (July 2022)

**INTERNATIONAL SEARCH REPORT**
Information on patent family members

| International application No. |
| --- |
| **PCT/CN2024/081471** |

| Patent document cited in search report | | | Publication date (day/month/year) | Patent family member(s) | | | Publication date (day/month/year) |
| --- | --- | --- | --- | --- | --- | --- | --- |
| CN | 113858966 | A | 31 December 2021 | CN | 113858966 | B | 19 March 2024 |
| CN | 115782696 | A | 14 March 2023 | CN | 115782696 | B | 04 July 2023 |
| US | 2023163378 | A1 | 25 May 2023 | None | | | |
| CN | 113085516 | A | 09 July 2021 | CN | 113085516 | B | 06 May 2022 |
| CN | 113745702 | A | 03 December 2021 | CN | 113745702 | B | 09 May 2023 |
| US | 2021351732 | A1 | 11 November 2021 | US | 11290045 | B2 | 29 March 2022 |

Form PCT/ISA/210 (patent family annex) (July 2022)

**EP 4 744 954 A1**

**Patent documents cited in the description**

- CN 202310956800X

- CN 202311485386